# EUROPEAN PATENT APPLICATION

(11) **EP 2 562 650 A1**
(43) Date of publication of application: **27.02.2013**
(21) Application number: 11853041.9
(22) Date of filing: 19.09.2011
(51) Int. Cl.: G06F 11/22

(54) **TRIGGERING OPERATION METHOD, AND METHOD, DEVICE AND SYSTEM FOR MULTI-CORE GROUPING DEBUGGING**

(30) Priority: 31.12.2010 CN 201010618249
(71) Applicant: Huawei Technologies Co., Ltd., Shenzhen, Guangdong 518129 (CN)
(72) Inventor: HU, Ziang, Shenzhen Guangdong 518129 (CN); BRICE, Dobry, Santa Clara California 95050 (US); LEI, Zhen, Shenzhen Guangdong 518129 (CN); CUI, Shiqiang, Shenzhen Guangdong 518129 (CN)
(74) Representative: Kreuz, Georg Maria
(86) International application number: PCT/CN2011/079840
(87) International publication number: WO 2012/088930

(57) **Abstract**

Embodiments of the present invention provide a method for triggering an action, a multi-core group debugging method, apparatus and system, where the multi-core group debugging method includes: obtaining a second debugging message, in which the second debugging message includes a group identity group id and action field information; match the group identity group id in the second debugging message and one or more group identities in a group table stored in a current processor core, and if the group identity group id in the second debugging message is matched with one group identity group id in the group table successfully, executing an action action indicated by the action field information in the second debugging message, in which the group table stored in the current processor core includes the one or more group identities group ids, and the one or more group identities group ids are used for representing one or more core groups to which the current processor core belongs. Through the embodiments of the present invention, the flexibility and efficiency of multi-core debugging are enhanced.

## Description

### FIELD OF THE INVENTION

The present invention relates to the field of communications technologies, and in particular, to a method for triggering an action, a multi-core group debugging method, apparatus and system.

### BACKGROUND OF THE INVENTION

The "multi-core" refers to one chip or target board, which contains two and more logic devices capable of executing codes, for example, a central processing unit (CPU, Central Processing Unit), a digital signal processor (DSP, digital signal processing), and a field programmable gate array (FPGA, Field Programmable Gate Array). A multi-core system environment involves homogeneous and heterogeneous cores, and as the system complexity keeps increasing, many debugging challenges appear in a multi-core environment.

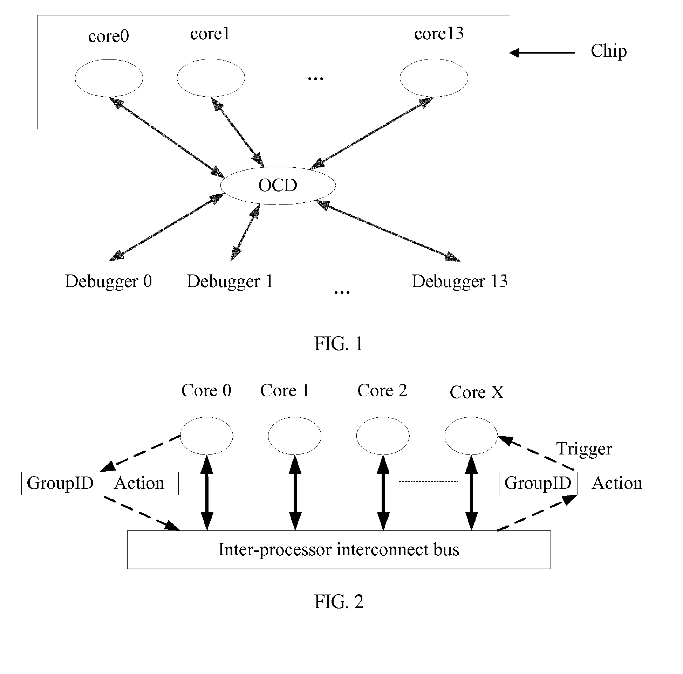

Currently, the muxing (Muxing) technology is generally adopted for multi-core debugging in the industry. As shown in FIG. 1, an independent debugger is employed in a single debugging interface, which communicates with all cores through OCD (On Chip Debugging, on chip debugging), each debugger is connected to the OCD to debug a corresponding single core, multiple debuggers do not communicate with each other, and the so-called multi-core debugging is practically a set of debugging of multiple single cores, that is, multiple debuggers are employed to accomplish the debugging of the corresponding single cores.

During the implementation of the present invention, the inventor finds that when the existing muxing technology is applied toperform a multi-core debugging process, the flexibility and efficiency are low, and multiple cores cannot be synchronously debugged (for example, a developer has to start or stop multiple cores one by one in sequence if necessary).

### SUMMARY OF THE INVENTION

Embodiments of the present invention provide a method for triggering an action, a multi-core group debugging method, apparatus and system, so as to enhance the flexibility and efficiency of multi-core debugging.

On one aspect, an embodiment of the present invention provides a method for triggering an action, in which the method includes:
obtaining a trigger-action message, in which the trigger-action message includes a trigger identity trigger id and action field information; and
matching the trigger identity trigger id in the trigger-action message and a trigger identity trigger id stored in a current processor core, and if the matching succeeds, executing an action action indicated by the action field information in the trigger-action message.

On another aspect, an embodiment of the present invention provides a multi-core processor system, in which the multi-core processor system includes a main control core and multiple action cores, and the main control core communicates with the multiple action cores through an inter-processor interconnect bus, where,
the main control core is configured to transmit a trigger-action message or an inter-processor communication interrupt that points to the trigger-action message through the inter-processor interconnect bus, in which the trigger-action message includes a trigger identity trigger id and action field information; and
each of the multiple action cores is configured to receive the trigger-action message, or obtain the trigger-action message according to the received inter-processor communication interrupt, match the trigger identity trigger id in the trigger-action message and a trigger identity trigger id stored in the current action core, and if the matching succeeds, execute an action action indicated by the action field information in the trigger-action message.

On another aspect, an embodiment of the present invention provides a processor core, in which the processor core includes:
a storage unit, configured to store one or more trigger identities trigger ids, in which the one or more trigger identities trigger ids represent one or more core groups to which the processor core belongs, or the processor core;
an obtaining unit, configured to obtain a trigger-action message, in which the trigger-action message includes a trigger identity trigger id and action field information;
a matching unit, configured to match the trigger identity trigger id in the trigger-action message and the one or more trigger identities trigger ids stored in the storage unit; and
a processing unit, configured to execute an action action indicated by the action field information in the trigger-action message, if it is obtained by the matching unit that the trigger identity trigger id in the trigger-action message is matched with one trigger identity trigger id stored in the storage unit successfully.

Therefore, in the embodiments of the present invention, a trigger id in an obtained trigger-action message and one or more trigger ids stored in a current processor core are matched, if the trigger id in the trigger-action message is matched with one trigger id stored in the current processor core successfully, an action action indicated by action field information in the trigger-action message is executed, so as to synchronously trigger one or more processor cores that belong to one status or one attribute, where the one or more processor cores that belong to the same status or the same attribute are identified by the same trigger id, thereby enhancing the flexibility and efficiency of multi-core trigger, and particularly enhancing the flexibility and efficiency of synchronous multi-core trigger.

On another aspect, an embodiment of the present invention provides a multi-core group debugging method, applied in a multi-core processor system including at least two processor cores, in which the method includes:
obtaining a second debugging message, in which the second debugging message includes a group identity group id and action field information; and
matching the group identity group id in the second debugging message and one or more group identities in a group table stored in a current processor core, and if the group identity group id in the second debugging message is matched with one group identity group id in the group table successfully, execute an action action indicated by the action field information in the second debugging message, in which the group table stored in the current processor core comprises the one or more group identities group ids, the one or more group identities group ids are used for representing one or more core groups to which the current processor core belongs.

On another aspect, an embodiment of the present invention provides a debugging system, in which the debugging system includes a front-end debugger and a back-end debugging platform, a multi-core processor system is deployed in the back-end debugging platform, the multi-core processor system includes a main control core and multiple action cores, and the main control core communicates with the multiple action cores through an inter-processor interconnect bus, where,
the front-end debugger is configured to receive a debugging command delivered by a user, and convert the debugging command into a corresponding first debugging message and send the first debugging message to the main control core, in which the first debugging message includes a group identity group id and action field information;
the main control core is configured to convert the first debugging message into a second debugging message recognizable in inter-processor communication after receiving the first debugging message, send, through the inter-processor interconnect bus, the second debugging message or an inter-processor communication interrupt that points to the second debugging message;
each of the multiple action cores is configured to receive the second debugging message or obtain the second debugging message according to the received inter-processor communication interrupt, match a group identity group id in the second debugging message and a group identity group id stored in the current action core, and if the matching succeeds, execute an action action indicated by the action field information in the second debugging message, in which the group identity group id stored in the current action core is used for representing a core group to which the current action core belongs.

Therefore, in the embodiments of the present invention, based on the flexible core group of a processor core, a group identity group id in an obtained second debugging message and one or more group identities stored in a current processor core (that is, the group identity group id is used for representing a core group to which the current processor core belongs) are matched, and if the group identity group id in the second debugging message is matched with one group identity group id stored in the current processor core successfully, an action action indicated by the action field information in the second debugging message is executed, so as to synchronously debug one or more processor cores included in the same core group, thereby enhancing the flexibility and efficiency of multi-core debugging.

### BRIEF DESCRIPTION OF THE DRAWINGS

To describe the technical solutions in the embodiments of the present invention or in the prior art more clearly, the accompanying drawings required for describing the embodiments or the prior art are briefly introduced in the following. Apparently, the accompanying drawings in the following description are only about some embodiments of the present invention, and persons of ordinary skill in the art may still derive other drawings from these accompanying drawings without creative efforts.

FIG. 1 is a schematic diagram of the principle of multi-core debugging employing the muxing technology in the prior art;

FIG. 2 is a schematic diagram of a logical structure of a multi-core processor system according to an embodiment of the present invention;

FIG. 2a is a schematic structural diagram of a multi-core processor system according to an embodiment of the present invention;

FIG. 2b is a schematic structural diagram of another multi-core processor system according to an embodiment of the present invention;

FIG. 2c is a schematic flow chart of a method for triggering an action provided in an embodiment of the present invention;

FIG. 3a is a schematic structural diagram of a debugging system provided in an embodiment of the present invention;

FIG. 3b is a schematic structural diagram of a processor core provided in an embodiment of the present invention;

FIG. 4 is a schematic flow chart of a multi-core group debugging method provided in an embodiment of the present invention;

FIG. 5a-A and FIG. 5a-B are schematic diagrams of the interaction of a multi-core group debugging method according to an embodiment of the present invention;

FIG. 5b is a schematic diagram of an example of a core group scenario in a multi-core group debugging method according to an embodiment of the present invention;

FIG. 5c is a schematic diagram of a hardware group table and a software group table after a core group is created in the core group scenario in FIG. 5b;

FIG. 6a is a schematic diagram of the interaction of a multi-core group debugging method according to an embodiment of the present invention;

FIG. 6b is a schematic diagram of a latest core group condition of the multi-core processor system in FIG. 6;

FIG. 7a is a schematic diagram of the interaction of a multi-core group debugging method according to an embodiment of the present invention;

FIG. 7b is a schematic diagram of a latest core group condition of the multi-core processor system in FIG. 7a; and

FIG. 8 is a schematic diagram of a monitoring scenario according to an embodiment of the present invention.

### DETAILED DESCRIPTION OF THE EMBODIMENTS

To make the objectives, technical solutions, and advantages of the embodiments of the present invention clearer, the technical solutions provided by the embodiments of the present invention are hereinafter described clearly and completely with reference to the accompanying drawings. Evidently, the described embodiments are only some exemplary embodiments of the present invention, rather than all embodiments of the present invention. All other embodiments, which can be derived by persons of ordinary skill in the art from the embodiments of the present invention without any creative effort, shall fall within the protection scope of the present invention.

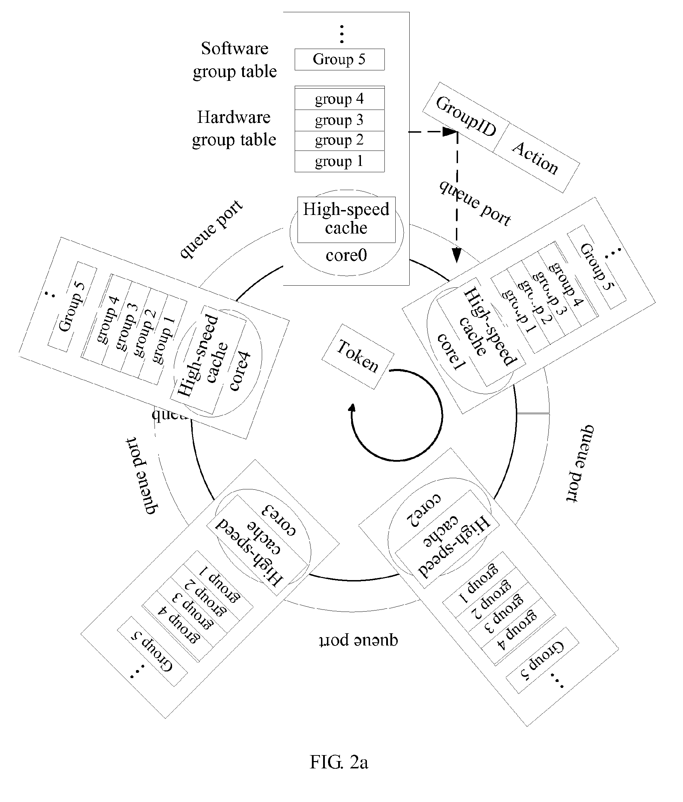

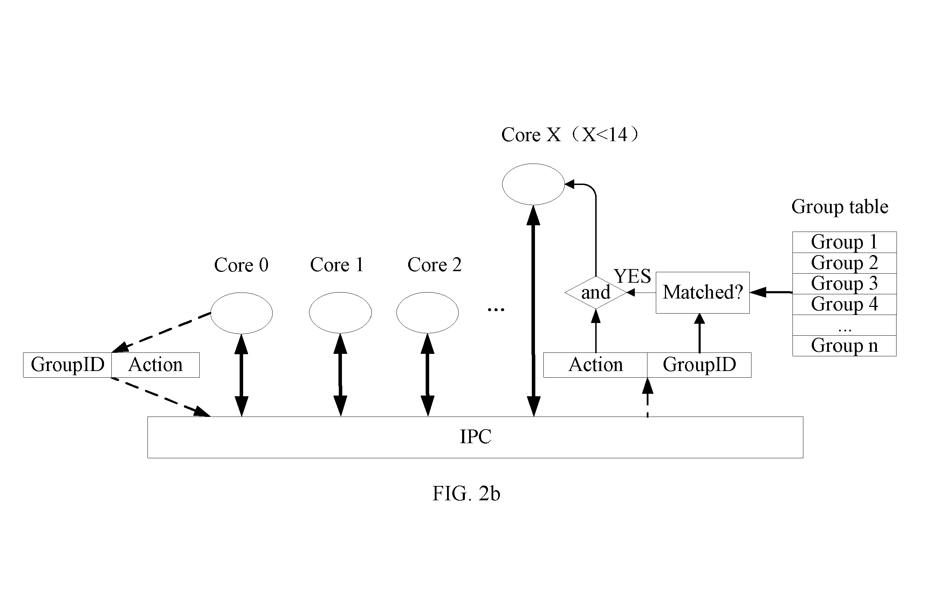

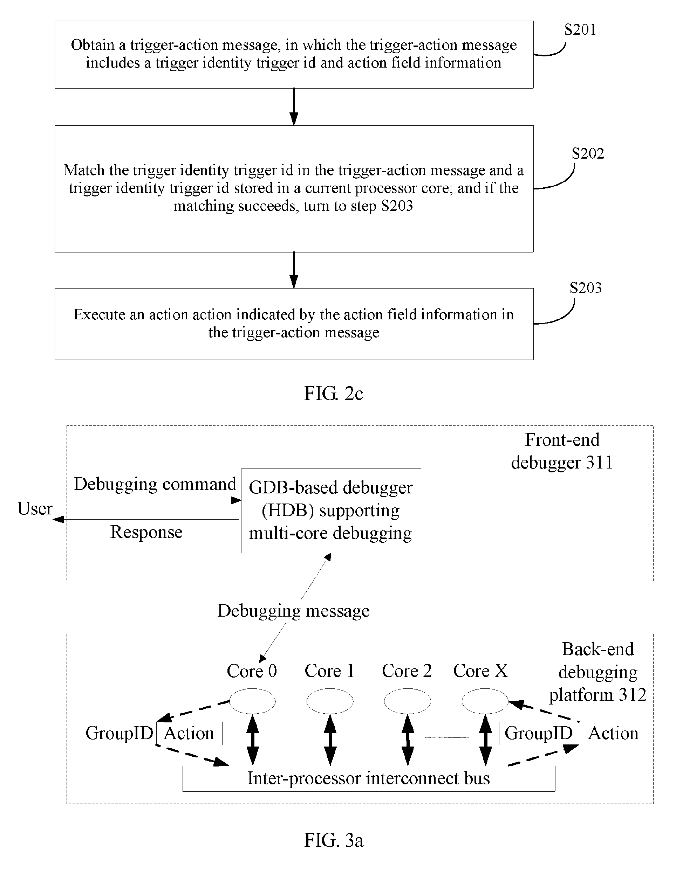

Referring to FIG. 2, FIG. 2 is a schematic diagram of a logical structure of a multi-core processor system according to an embodiment of the present invention. As shown in FIG. 2, the multi-core processor system in the embodiment of the present invention includes: multiple processor cores Core0, Core1, Core2, ..., CoreX, in which Core0 is a main control core, and Core1, Core2, ..., and CoreX are action cores, and the multiple processor cores communicate with each other through an inter-processor interconnect bus, where:
the main control core Core0 is configured to transmit, through the inter-processor interconnect bus, a trigger-action message or an inter-processor communication (Inter-Processor Communication, IPC) interrupt that points to the trigger-action message, in which the trigger-action message includes a trigger identity trigger id and action field information.

It should be noted that, the main control core may be designated in advance or designated dynamically in an application process and is a processor core configured to forward a trigger-action message. Core0 is used as an example in this embodiment of the present invention, and it should be understood that here the main control core includes, but is not limited to, Core0.

It should be noted that, here the IPC interrupt points to a trigger-action message or points to the address space where a trigger-action message is stored.

In an implementation manner, the IPC interrupt here contains a pointer that points to the trigger-action message, and after receiving the IPC interrupt, an action core obtains the trigger-action message according to the pointer contained in the IPC interrupt. Specifically, the pointer contained in the IPC interrupt points to the corresponding address space of the shared memory of the multi-core processor system, and a trigger-action message, namely, a trigger-action message transferred by the main control core Core0 is stored in the address space; or, the pointer contained in the IPC interrupt points to the corresponding address space of a register in a main control processor core, and a trigger-action message, namely, a trigger-action message transferred by the main control core Core0 is stored in the address space.

Each of the action cores Core1, Core2, ..., and CoreX is configured to receive the trigger-action message, or obtain the trigger-action message according to the received inter-processor communication interrupt, match the trigger identity trigger id in the trigger-action message and a trigger identity trigger id stored in the current action core, and if the matching succeeds, execute an action action indicated by the action field information in the trigger-action message.

In the system in this embodiment of the present invention, the trigger identity trigger id in the trigger-action message is a group identity group id, or a core identity core id; where the group identity group id is used for representting a core group which needs to execute an action indicated by the action field information in the trigger-action message; the core identity core id is used for representting a processor core which needs to execute an action action indicated by the action field information; the action field information in the trigger-action message is an action action command, or address information that points to an action action command. The action action command includes one or more of a create group command, a delete group command, a stop group command, a run group command, a set break command (break), a resume command (resume or continue), and an execute one step command (step).

The multi-core processor system in this embodiment of the present invention is applied to scenarios of a multi-core program such as performance analysis and monitoring. Here, the application to the monitoring scenario is taken as an example for illustration:

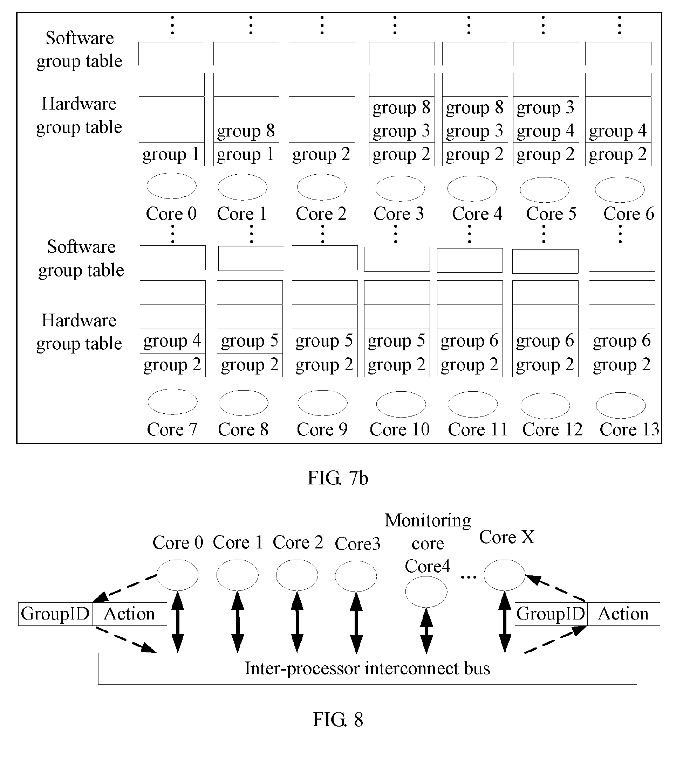

Exemplarily, a certain action core (illustrated by Core4 in FIG. 8) in the multi-core processor system in this embodiment of the present invention further serves as a monitoring core, and correspondingly, Core4 is further configured to store the group identity of a core group to be monitored and the group identity of a core group to which the main control core belongs, and is configured to monitor the trigger-action message interaction between the main control core and the core group to be monitored according to the group identity of a core group to be monitored and the group identity of a core group to which the main control core belongs, where the group identity stored in the action core is used for representing a core group to which the action core belongs. It should be noted that, here a case in which the trigger identity trigger id in the trigger-action message is served as a group identity group id and the group identity group id is used for representting a core group which needs to execute an action indicated by the action field information in the trigger-action message is used for illustration.

As shown in FIG. 8, in a multi-core scenario, the main control core communicates with a core group by sending a trigger-action message through an inter-processor interconnect bus. A monitoring core adds a group1 core group number, a main control core-core group number in a hardware group table or a software group table of the core, so that the monitoring core can monitor the trigger-action message interaction between a main control core and the core group group1, and can also precisely obtain start and end time of a certain action, thereby obtaining a precise time sequence of parallel programs and facilitating the performance analysis of the parallel programs.

When the multi-core processor system in this embodiment of the present invention is applied to multi-core debugging across multiple types of cores having different architecture, the main control core Core0 is specifically configured to, after receiving a first debugging message, transmit, through the inter-processor interconnect bus, the second debugging message obtained after conversion or an inter-processor communication (Inter-Processor Communication, IPC) interrupt that points to the second debugging message, in which the second debugging message includes a group identity(group id) and action field information, and the group id is used for representting a core group which needs to execute an action indicated by the action field information.

Each of the action cores Core1, Core2, ..., and CoreX is specifically configured to receive the second debugging message through the inter-processor interconnect bus or obtain the second debugging message according to the received IPC interrupt, match the group identity group id in the second debugging message and a group table stored in the current action core, and if the group identity group id in the second debugging message is matched with one group id included in the group table successfully, execute an action action indicated by the action field information in the second debugging message, in which the group table stored in the current action core comprises the one or more group identities group ids, the one or more group identities group ids are used for representing one or more core groups to which the current action core belongs.

In practical applications, Core0 not only serves as a main control core to forward a second debugging message, and also serves as an action core; correspondingly, the main control core Core0 is further configured to match the group identity group id in the obtained second debugging message and a group table stored in the current core Core0, and if the group identity group id in the obtained second debugging message is matched with one group id included in the group table successfully, execute an action action indicated by the action field information in the second debugging message, in which the group table stored in the current core Core0 comprises the one or more group identities group ids, the one or more group identities group ids are used for representing one or more core groups to which the current core Core0 belongs.

It should be noted that in this embodiment of the present invention, the core group may be used to work as a main control core. In multiple core systems, a group core serves as a main control core to balance the communication traffic of the main control core. In addition, the effect of mutual backup can be achieved.

It can be seen that, in the multi-core processor system provided in this embodiment of the present invention, a trigger id in an obtained trigger-action message and a trigger id stored in a current processor core are matched, if the matching succeeds, an action action indicated by action field information in the trigger-action message is executed, so as to synchronously trigger one or more processor cores that belong to one status or one attribute, where the one or more processor cores that belong to the same status or attribute are identified by the same trigger id, thereby enhancing the flexibility and efficiency of multi-core trigger, and particularly enhancing the flexibility and efficiency of synchronous multi-core trigger.

Furthermore, during the application to a debugging scenario, in this embodiment of the present invention, based on the flexible core group of a processor core, a group identity group id in an obtained second debugging message and a group identity stored in a current processor core (the group identity group id is used for representing a core group to which the current processor core belongs) are matched, and if the group identity group id in the second debugging message is matched with the group identity group id stored in the current processor core successfully, an action action indicated by the action field information in the second debugging message is executed, so as to synchronously debug one or more processor cores contained in the same core group, thereby enhancing the flexibility and efficiency of multi-core debugging, and particularly enhancing the flexibility and efficiency of multi-core group debugging.

Furthermore, in this embodiment of the present invention, multi-core debugging across multiple types of cores having different architecture is implemented, and this embodiment of the present invention is not limited to a homogeneous and heterogeneous core, thereby implementing the cooperative debugging of an entire system.

Referring to FIG. 2a, FIG. 2a is a schematic structural diagram of a multi-core processor system according to an embodiment of the present invention. In this embodiment, a queue port queue port is used to implement an inter-processor interconnect bus. As shown in FIG. 2a, the multi-core processor system in this embodiment of the present invention includes: Core0, Core1, Core2, Core3, Core4, where it is assumed that Core0 is a main control core and Core1, Core2, Core3, and Core4 are action cores, multiple processor cores are connected into one ring, debugging messages are transferred through the queue port, one token is transferred among all processors in sequence along the queue port in the ring, so as to control that the queue port is only exclusively occupied by one core at one time, and when the cores in the ring are all idle, the token travels around the ring. A core can only send a debugging message after obtaining the token.

In this embodiment of the present invention, core0 sends a debugging message, core1 that receives the debugging message processes the debugging message, and transmits the debugging message to a next core core2 through the queue port in sequence. The specific process that core1 that receives the debugging message processes the debugging message is: after receiving the debugging message, core1 stores the debugging message in a high-speed cache thereof, matches the Group ID contained in the debugging message and a hardware core group table, if the Group ID contained in the debugging message is matched with one Group ID included in the hardware core group table successfully, executes an action action contained in the debugging message; and if the matching fails, continues matching the group id contained in the debugging message and a software core group table, and if the Group ID contained in the debugging message is matched with one Group ID included in the software core group table successfully, executes the action action contained in the debugging message and takes out the debugging message from the high-speed cache and sends the debugging message to a next core through the queue port.

Referring to FIG. 2b, FIG. 2b is a schematic structural diagram of another multi-core processor system according to an embodiment of the present invention. In this embodiment, IPC (Inter-process communication) is used to implement an inter-processor interconnect bus. It should be noted that, in this embodiment of the present invention, the IPC can be used to transmit commands to multiple cores at the same time, and after receiving IPC interrupt, each core immediately performs processing and enters a debugging status, thereby achieving the objective of synchronously debugging multiple cores. As shown in FIG. 2b, the multi-core processor system in this embodiment of the present invention includes: Core0, Core1, Core2, Core3, ..., and CoreX, where it is assumed that Core0 is a main control core and Core1, Core2, Core3, ..., and CoreX are action cores. After Core0 receives a debugging message, Core0 sets bits that are corresponding to all cores in an IPC target register, so that all cores may receive the IPC interrupt, and the IPC interrupt contains a pointer that points to the debugging message. After receiving the IPC interrupt, each core finds out, according to the pointer that points to the debugging message, the debugging message sent by core0, matches a Group ID contained in the debugging message and a core group table stored therein, if the Group ID contained in the debugging message is matched with one Group ID included in the core group table successfully, executes an action action contained in the debugging message and stores a processing result in the shared memory of Core0, Core1, Core2, Core3, ..., and CoreX, and if the Group ID contained in the debugging message is matched with any one Group ID included in the core group table unsucessfully, no action is executed. CoreX is taken as an example in FIG. 2b.

It should be noted that, in an implementation manner, if the debugging message is small, the content of the debugging message can be directly stored in an IPC operator register, and the debugging message can be found from the IPC operator register through a pointer; if the debugging message is big, a pointer that points to the debugging message can be stored in the IPC operator register, and the pointer points to the debugging message in the shared memory.

Referring to FIG. 2c, FIG. 2c is a schematic flow chart of a method for triggering an action provided in an embodiment of the present invention, and the method is applied to the processor core in the multi-core processor system shown in FIG. 2. As shown in FIG. 2c, the method may include the following steps:

S201. Obtain a trigger-action message, in which the trigger-action message includes a trigger identity trigger id and action field information.

Specifically, the trigger-action message sent by a main control processor core is received through an inter-processor interconnect bus; or, the trigger-action message sent by a main control processor core is obtained according to an inter-processor communication interrupt received through the inter-processor interconnect bus.

Specifically, in S201, the trigger identity trigger id in the trigger-action message is a group identity group id, or a core identity core id; where the group identity group id is used for representing a core group which needs to execute an action action indicated by the action field information in the trigger-action message; the core identity core id is used for representing a processor core which needs to execute an action action indicated by the action field information; the action field information in the trigger-action message is an action action command, or address information that points to an action action command, where the action action command includes one or more of a create group command, a delete group command, a stop group command, a run group command, a set break command (break), a resume command (resume), an execute one step command (step).

S202. Match the trigger identity trigger id in the trigger-action message and a trigger identity trigger id stored in the current processor core; and if the matching succeeds, turn to step S203.

S203. Execute an action action indicated by the action field information in the trigger-action message.

In an implementation manner, the process of matching the trigger identity trigger id in the trigger-action message and a trigger identity trigger id stored in the current processor core, and if the matching succeeds, executing an action action indicated by the action field information in the trigger-action message, includes:
matching the trigger identity trigger id in the trigger-action message and one or more trigger identities trigger ids stored in a hardware register of the current processor core, and if the trigger identity trigger id in the trigger-action message is matched with one trigger identity trigger id stored in the hardware register successfully, executing an action action indicated by the action field information in the trigger-action message.

If the trigger identity trigger id in the trigger-action message is matched with any one trigger identity trigger id stored in the hardware register unsuccessfully, the method further includes:
matching the trigger identity trigger id in the trigger-action message and one or more trigger identities trigger ids stored in the memory of the current processor core, and if the trigger identity trigger id in the trigger-action message is matched with one trigger identity trigger id stored in the memory successfully, executing an action action indicated by the action field information in the trigger-action message.

Also, before the step of matching the trigger identity trigger id in the trigger-action message and the one or more trigger identities trigger ids stored in the memory of the current processor core, the method further includes:
determining whether the number of core groups to which the current processor core belongs is greater than a first threshold value, and if the number of core groups to which the current processor core belongs is greater than the first threshold value, executing the step of matching the trigger identity trigger id in the trigger-action message and the one or more trigger identities trigger ids stored in the memory of the current processor core.

In an implementation manner, the trigger identity trigger id in the trigger-action message is a group identity group id, the trigger identity stored in the current processor core is a group identity group id, and the group identity group id is used for representing a core group to which the current processor core belongs.

If a first core group including one or more member cores is to be created dynamically, the group identity group id in the obtained trigger-action message is a global core group identity, the action field information is a create group command, in which the create group command contains a group identity of the first core group to be created and one or more core identities of the one or more member cores that joins the first core group, or address information that points to the create group command.

If a member core in the first core group is to be stopped dynamically, the group identity group id in the obtained trigger-action message is a first core group identity, and the action field information is a stop group command, or address information that points to the stop group command.

If a member core in the first core group is to be run dynamically, the group identity group id in the obtained trigger-action message is a first core group identity, and the action field information is a run group command, or address information that points to the run group command.

If a member core in the first core group is to be deleted dynamically, the group identity group id in the obtained trigger-action message is a first core group identity, and the action field information is a delete group command, or address information that points to the delete group command.

An example of dynamically creating a core group is taken for illustration in the following.

The trigger identity trigger id in the trigger-action message is a global core group identity, the action field information is a create group command, or address information that points to the create group command, where the create group command contains a group identity of a core group to be created and a core identity of a member core that joins the core group to be created.

If the action field information is a create group command, step S203 includes: when the core identity of the member core that joins the core group to be created and a core identity of the current processor core are the same, where the core identity of the member core is contained in the create group command, storing, according to the create group command, the group identity of the core group to be created, where the group identity of the core group to be created is contained in the create group command.

If the action field information is address information that points to the create group command, step S203 includes:
obtaining the create group command according to the address information; and
when the core identity of the member core that joins the core group to be created and a core identity of the current processor core are the same, where the core identity of the member core is contained in the create group command, storing, according to the create group command, the group identity of the core group to be created, where the group identity of the core group to be created is contained in the create group command.

An example of dynamically deleting a core group is taken for illustration in the following.

A trigger identity trigger id in a trigger-action message is a group identity group id, a trigger identity stored in the current processor core are one or more group identities group ids, and the one or more group identities group ids are used for representing one or more core groups to which the current processor core belongs.

If the action field information is a delete group command, step S203 includes:
according to the delete group command, deleting the group identity group id in the trigger-action message from the one or more group identities group ids stored in the current processor core.

If the action field information is address information that points to the delete group command, step S203 includes:
obtaining the delete group command according to the address information; and
according to the delete group command, deleting the group identity group id in the trigger-action message from the one or more group identities group ids stored in the current processor core.

It can be seen that, in the method for triggering an action in this embodiment of the present invention, a trigger id in an obtained trigger-action message and a trigger id stored in a current processor core are matched, if the matching succeeds, an action action indicated by action field information in the trigger-action message is executed, so as to synchronously trigger one or more processor cores that belong to one status or one attribute, where the one or more processor cores that belong to the same status or attribute are identified by the same trigger id, thereby enhancing the flexibility and efficiency of multi-core trigger, and particularly enhancing the flexibility and efficiency of synchronous multi-core trigger.

When the embodiment of the present invention is applied in a debugging scenario, the technical solutions are introduced in detail in the following:

Referring to FIG. 3a, FIG. 3a is a schematic structural diagram of a debugging system provided in an embodiment of the present invention, and the debugging system in this embodiment of the present invention includes a front-end debugger 311 and a back-end debugging platform 312. The back-end debugging platform 32 is deployed with a multi-core processor system, the multi-core processor system includes a main control core (illustrated by core0 in FIG. 3a) and multiple action cores (illustrated by Core1, Core2, Core3, ..., and CoreX in FIG. 3a), and the main control core communicates with the multiple action cores through an inter-processor interconnect bus.

The front-end debugger 311 is configured to receive a debugging command delivered by a user, and convert the debugging command into a corresponding first debugging message and send the first debugging message to the main control core, in which the first debugging message includes a group identity group id and action field information, and the group identity group id is used for representing a core group which needs to execute an action action indicated by the action field information.

The main control core Core0 is configured to receive the first debugging message and convert the first debugging message into a second debugging message recognizable in inter-processor communication, send, through an inter-processor interconnect bus, the second debugging message or an inter-processor communication (Inter-Processor Communication, IPC) interrupt that points to the second debugging message.

It should be noted that the main control core may be designated in advance or dynamically designated in a debugging process, which is a processor core configured to forward a debugging message. Core0 is used as an example in this embodiment of the present invention, and it should be understood that here the main control core includes, but is not limited to, Core0.

Each of the action cores Core1, Core2, ..., and CoreX is configured to receive the second debugging message through the inter-processor interconnect bus or obtain the second debugging message according to the received IPC interrupt, match a group identity group id in the second debugging message and one or more group identities group ids stored in the current action core, and if the group identity group id in the second debugging message is matched with one group id stored in the current action core successfully, execute an action action indicated by the action field information in the second debugging message, where the group identity group id stored in the current action core is used for representing a core group to which the current action core belongs. It should be noted that, the one or more group identities group ids are stored in the current action core.

In practical applications, Core0 not only serves as a main control core that forwards a debugging message, but also serves as a main control core.

Correspondingly, the main control core Core0 is further configured to match the group identity group id in the second debugging message and a group identity group id stored in the current core Core0, and if the matching succeeds, execute an action action indicated by the action field information in the second debugging message, in which the group identity group id stored in the current core Core0 is used for representing a core group to which the current core Core0 belongs.

It should be noted that in this embodiment of the present invention, the action field information may be an action command itself, or may also be address information that points to an action command, where the action command includes one or more of a create group command, a stop group command, a run group command, break (a set break command), resume or continue (a resume command), and a step (an execute one step command).

It can be seen that, in the debugging system provided in this embodiment of the present invention, based on the flexible core group of a processor core, a group identity group id in an obtained second debugging message and a group identity stored in a current processor core (the group identity group id is used for representing a core group to which the current processor core belongs) are matched, and if the group identity group id in the second debugging message is matched with the group identity group id stored in the current processor core successfully, an action action indicated by the action field information in the second debugging message is executed, so as to synchronously debug one or more processor cores contained in the same core group, thereby enhancing the flexibility and efficiency of multi-core debugging, and particularly enhancing the flexibility and efficiency of multi-core group debugging.

Furthermore, in this embodiment of the present invention, multi-core debugging across multiple types of cores having different architecture is implemented, and this embodiment of the present invention is not limited to a homogeneous and heterogeneous core, thereby implementing the cooperative debugging of an entire system.

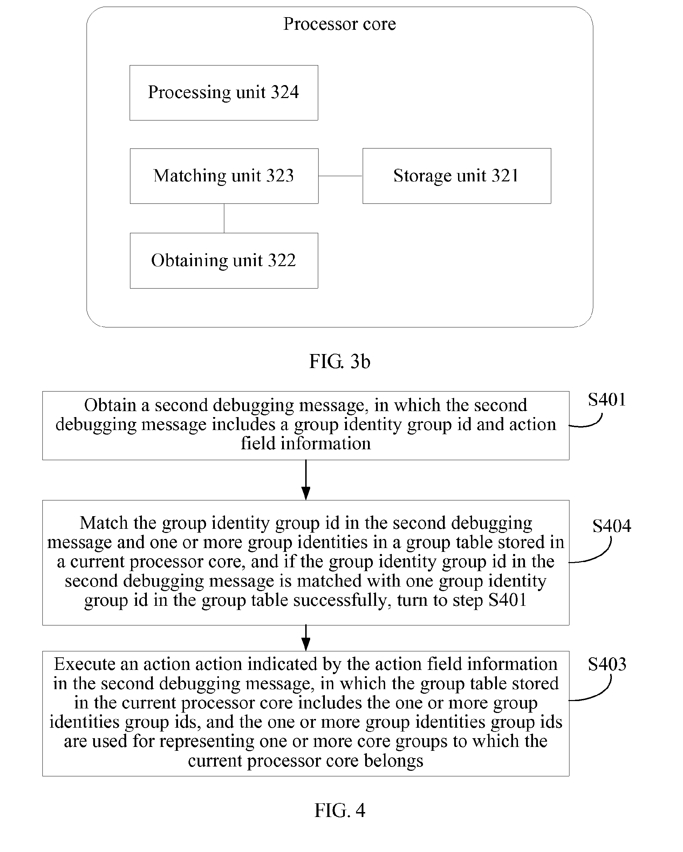

Referring to FIG. 3b, FIG. 3b is a schematic structural diagram of a processor core provided in an embodiment of the present invention. As shown in FIG. 3ab, the processor core includes:
a storage unit 321, configured to store one or more trigger identities trigger ids, in which the one or more trigger identities trigger ids represent one or more core groups to which the processor core belongs, or the processor core;
an obtaining unit 322, configured to obtain a trigger-action message, in which the trigger-action message includes a trigger identity trigger id and action field information;
a matching unit 323, configured to match the trigger identity trigger id in the trigger-action message and the one or more trigger identities trigger ids stored in the storage unit; and
a processing unit 324, configured to, if it is obtained by the matching unit that the trigger identity trigger id in the trigger-action message is matched with one trigger identity trigger id stored in the storage unit successfully, execute an action action indicated by the action field information in the trigger-action message. It should be noted that, the processing unit 324 is usually implemented by software, and it can be understand that it is implemented by a general-purpose processor core reading a software code instruction having a special function.

In an implementation manner, the obtaining unit 322 is specifically configured to receive a trigger-action message through an inter-processor interconnect bus; or, is specifically configured to receive, through an inter-processor interconnect bus, an inter-processor communication interrupt that points to a trigger-action message, and according to the inter-processor communication interrupt, obtain the trigger-action message sent by a main control processor core.

In an implementation manner, the storage unit 321 includes a register and/or memory.

Correspondingly, the matching unit 323 includes:
a hardware matching unit, configured to match the trigger identity trigger id in the trigger-action message and one or more trigger identities trigger ids stored in the register, and if the trigger identity trigger id in the trigger-action message is matched with one trigger identity trigger id stored in the register successfully, trigger the processing unit to execute an action action indicated by the action field information in the trigger-action message; where the hardware matching unit may be specifically a hardware matcher or hardware comparator, and it should be noted that the register may be integrated inside the hardware matcher or hardware comparator, and may also be hardware independent from the hardware matcher or hardware comparator; and
a software matching unit, configured to, when the matching performed by the hardware comparison unit fails, match the trigger identity trigger id in the trigger-action message and one or more trigger identities trigger ids stored in the memory,and if the trigger identity trigger id in the trigger-action message is matched with one trigger identity trigger id stored in the memory successfully, trigger the processing unit to execute an action action indicated by the action field information in the trigger-action message.

Exemplarily, the processor core further includes:
a calculation determiner (not shown), configured to determine whether the number of core groups to which the processor core belongs is greater than a first threshold value.

Correspondingly, the software matching unit is specifically configured to, when the matching performed by the hardware comparison unit fails and the number of core groups to which the current processor core belongs is greater than the first threshold value, match the trigger identity trigger id in the trigger-action message and one or more trigger identities trigger ids stored in the memory, and if the trigger identity trigger id in the trigger-action message is matched with one trigger identity trigger id stored in the memory successfully, trigger the processing unit to execute an action action indicated by the action field information in the trigger-action message.

It can be seen that, in the method for triggering an action provided in the embodiment of the present invention, a trigger id in an obtained trigger-action message and a trigger id stored in a current processor core are matched, if the matching succeeds, an action action indicated by action field information in the trigger-action message is executed, so as to synchronously trigger one or more processor cores that belong to one status or one attribute, where the one or more processor cores that belong to the same status or attribute are identified by the same trigger id, thereby enhancing the flexibility and efficiency of multi-core trigger, and particularly enhancing the flexibility and efficiency of synchronous multi-core trigger.

Referring to FIG. 4, FIG. 4 is a schematic flow chart of a multi-core group debugging method provided in an embodiment of the present invention. The method is applied to a processor core in the multi-core processor system shown in FIG. 2. As shown in FIG. 4, the method may include the following steps:

S401. Obtain a second debugging message, in which the second debugging message includes a group identity group id and action field information.

Specifically, the second debugging message sent by a main control processor core is received through an inter-processor interconnect bus; or, the second debugging message sent by a main control processor core is obtained according to an inter-processor communication interrupt received through the inter-processor interconnect bus; where the main control processor core sends the second debugging message, which is obtained after conversion, on the inter-processor interconnect bus in response to a first debugging message delivered by a user.

Specifically, action field information in the second debugging message is an action action command, or address information that points to an action action command, where the action command is one or more of a create group command, a stop group command, a run group command, a set break command (break), a resume command (resume), an execute one step command (step).

S402. Match the group identity group id in the second debugging message and one or more group identities in a group table stored in a current processor core, and if the group identity group id in the second debugging message is matched with one group identity group id in the group table successfully, turn to step S401.

It should be noted that, in an implementation manner, if the second debugging message contains multiple group ids, it indicates that the debugging on at least one common core in an intersection of multiple core groups represented by the multiple group ids is performed.

S403. Execute an action action indicated by the action field information in the second debugging message, in which the group table stored in the current processor core includes the one or more group identities group ids, and the one or more group identities group ids are used for representing one or more core groups to which the current processor core belongs.

In an implementation manner, the group table includes a hardware group table and a software group table, where the hardware group table is stored in a hardware register of the current processor core, and the software group table is stored in the memory of the current processor core.

The matching the group identity group id in the second debugging message and the one or more group identities in the group table stored in the current processor core, and if the group identity group id in the second debugging message is matched with one group identity group id in the group table successfully, executing an action action indicated by the action field information in the second debugging message include:
matching the group identity group id in the second debugging message and one or more group identities in the hardware group table, and if the group identity group id in the second debugging message is matched with one group identity group id in the hardware group table successfully, executing an action action indicated by the action field information in the second debugging message; and
if the matching fails, matching the group identity group id in the second debugging message and one or more group identities in the software group table, and if the group identity group id in the second debugging message is matched with one group identity group id in the software group table successfully, executing an action action indicated by the action field information in the second debugging message.

In a specific implementation manner, if a core group including one or more member cores is to be created dynamically, correspondingly,
the group identity group id in the second debugging message is a global core group identity, the action field information is a create group command, or address information that points to a create group command, where the create group command contains a group identity of a core group to be created and one or more core identities of the one or more member cores that joins the core group to be created;
if the action field information is a create group command, step S403 includes:
when one of the one or more core identities of the one or more member cores that joins the core group to be created and a core identity of a current processor core are the same, where the one or more core identities of the one or more member cores are contained in the create group command, storing, according to the create group command, the group identity of the core group to be created, where the group identity of the core group to be created is contained in the create group command;
if the action field information is address information that points to the create group command, step S403 includes: obtaining the create group command according to the address information; and
when one of the one or more core identities of the one or more member cores that joins the core group to be created and a core identity of a current processor core are the same, where the one or more core identities of the one or more member cores are contained in the create group command, storing, according to the create group command, the group identity of the core group to be created, where the group identity of the core group to be created is contained in the create group command; and it should be noted that, each processor core has one dedicated register for storing a core identity, for example, a Core ID of the processor core.

In a specific implementation manner, if a core group including one or more member cores is to be deleted dynamically, correspondingly,
if the action field information is a delete group command, step S403 includes: according to the delete group command, deleting the group identity group id in the trigger-action message from the one or more group identities group ids stored in the current processor core;
if the action field information is address information that points to the delete group command, step S403 includes:
obtaining the delete group command according to the address information; and
according to the delete group command, deleting the group identity group id in the trigger-action message from the one or more group identities group ids stored in the current processor core.

It should be noted that, with the method in this embodiment of the present invention, actions may be executed on all cores in the core group; and actions may also be executed on a specific core; if actions only need to be executed on a specific core, the specific core forms one core group.

it can be seen that, in the multi-core group debugging method provided in this embodiment of the present invention, based on the flexible core group of a processor core, a group identity group id in an obtained second debugging message and one or more group identities stored in a current processor core (the one or more group identities are used for representing one or more core groups to which the current processor core belongs) are matched, and if the group identity group id in the second debugging message is matched with one group identity group id stored in the current processor core successfully, an action action indicated by the action field information in the second debugging message is executed, so as to synchronously debug one or more processor cores contained in the same core group, thereby enhancing the flexibility and efficiency of multi-core debugging, and particularly enhancing the flexibility and efficiency of multi-core group debugging.

Furthermore, in this embodiment of the present invention, multi-core debugging across multiple types of cores having different architecture is implemented, and this embodiment of the present invention is not limited to a homogeneous and heterogeneous core, thereby implementing the cooperative debugging of an entire system.

The methods in the embodiments of the present invention are introduced in detail in the following in combination with practical applications:

1) Create a core group.

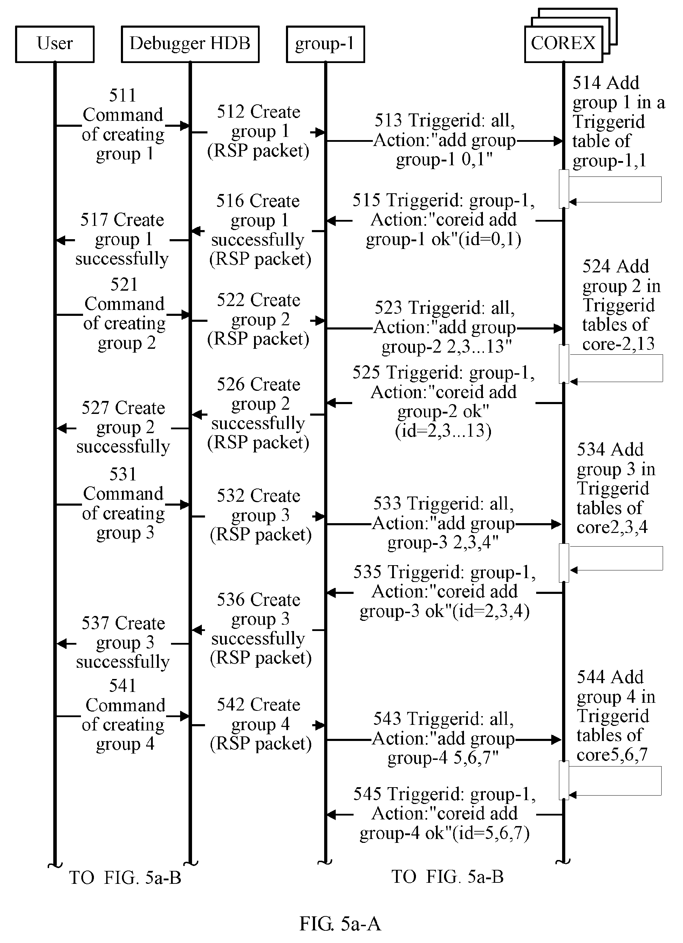

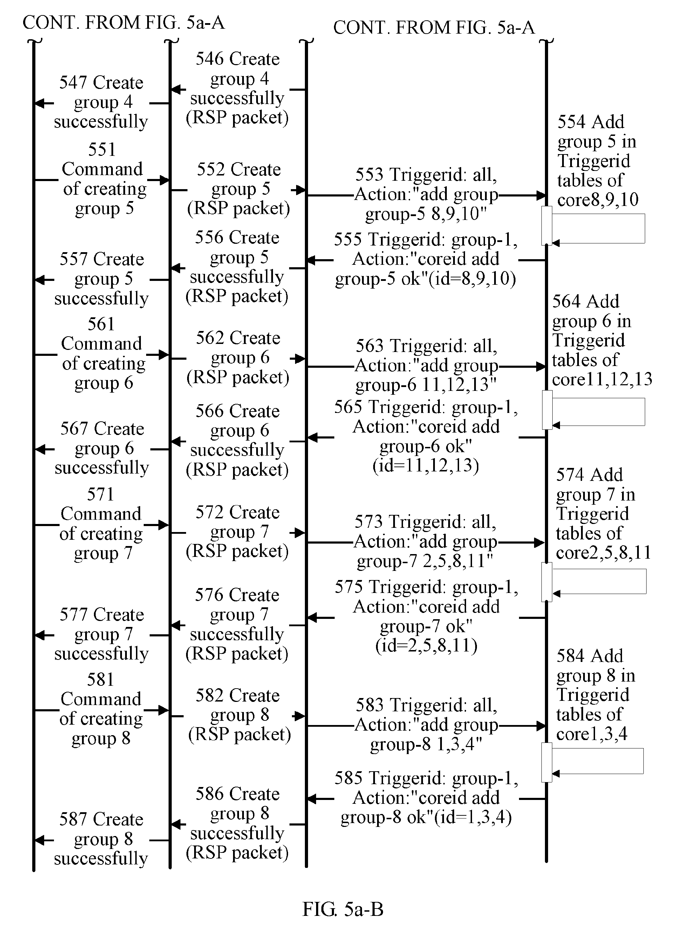

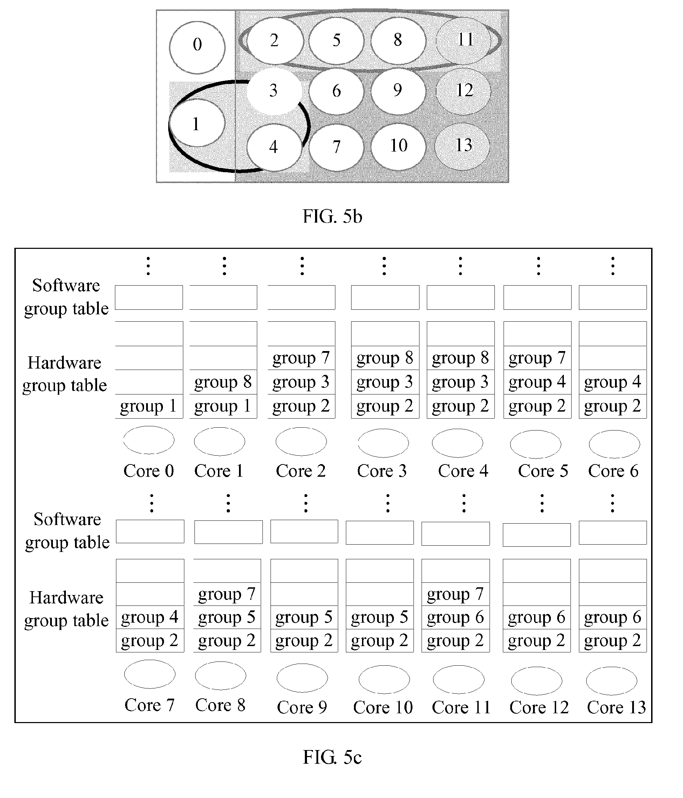

Referring to FIG. 5a-A and FIG. 5a-B, FIG. 5a-A and FIG. 5a-B are schematic diagrams of the interaction of a multi-core group debugging method according to an embodiment of the present invention, and this embodiment mainly introduces: during running, a core group formed by multiple cores (that is, a group to which the processor core belongs is set, and each core can be set to belong to multiple groups) is dynamically created, and a core group scenario is shown in FIG. 5b. In FIG. 5b, a core-group condition of a multi-core system having 14 cores (including 2 CPUs and 12 DSPs) is shown, in which:
all CPUs (CPU0, CPUs) are grouped as core group 1;
all DSPs (DSP2-13) are grouped as core group 2;
core group 3: DSP2, DSP3, DSP4;
core group 4: DSP5, DSP6, DSP7; and core group 3 and core group 4 are both subsets of core group 2;
core group 5: DSP8, DSP9, DSP10;
core group 6: DSP11, DSP12, DSP13;
core group 7: DSP2, DSP5, DSP8, DSP11; and an intersection between core group 7 and core group 3 is DSP2;
core group 8: CPU1, DSP3, DSP4, which is a heterogeneous core group formed by one CPU core and two DSP cores.

The method is applied to the debugging system environment shown in FIG. 3a, and can specifically include the following steps:

S511. A user sends a command for creating core group 1.

S512. A debugger HDB receives the command for creating core group 1, and sends, to a main control core, an RSP (RSP, remote serial protocol, the protocol used in HDB remote debugging) packet for indicating creation of core group 1; and in this embodiment, the main control core is core0.

S513. After receiving the RSP packet for indicating creation of core group 1, the main control core sends a trigger-action message on an inter-processor interconnect bus, in which the trigger-action message contains: a Trigger id: all, Action:"add group group-1 0,1" (for a format please refer to: add group groupid coreid[,coreid[,..]]), and Trigger id is all, representing that the trigger-action message is sent to all cores.

It should be noted that, "Trigger id: all" represents a global core group identity, that is, it can be understood that in a default condition, each core in the system belongs to a global core group.

Specifically, Trigger id is set to 0xffffffff, namely, all core groups.

S514. Each core receives the trigger-action message, in which Trigger id is 0xffffffff, and the succeful matching of each core by default can be understood, and an action action is directly executed, that is, Action:"add group group-1 0,1" is directly executed. In this embodiment, Core0 and Core 1 add core group 1 into their respective trigger id tables.

It should be noted that, the content of Action action can be transfer on the inter-processor interconnect bus, where the content of Action action is contained in the trigger-action message; or a trigger-action message containing address information that points to an action action may be transferred on the inter-processor interconnect bus. For the latter implementation, the core that receives the trigger-action message obtains the content of the Action action according to the address information.

S515. Core0, Core1 each return trigger id:group-1, action: "coreid add group-1 ok" to the main control core, and here coreids are Core0 and Core1.

Generally, to return to Core0 only, group-1 in this embodiment of the present invention should include Core0 only.

Exemplarily, group-1 in this embodiment of the present invention includes Core0 and Core1, and a core group may be used to work as a main control core. In multiple core systems, a group core serves as a main control core to balance the communication traffic of the main control core. In addition, the effect of mutual backup can be achieved.

S516. After receiving feedbacks from all cores in the core group, the main control core sends, to the HDB, an RSP packet for indicating successfully creating core group 1.

S517. The HDB shows the message for indicating successfully creating core group 1 to the user.

S521. The user sends a command for creating core group 2.

S522. After receiving the command for creating core group 2, the debugger HDB sends, to the main control core, an RSP packet for indicating creation of core group 2; and in this embodiment, the main control core is core0.

S523. After receiving the RSP packet for indicating creation of core group 2, the main control core sends a trigger-action message on the inter-processor interconnect bus, in which the trigger-action message contains: Trigger id: all, Action:"add group group-2 2,3...13", and Trigger id is all, representing that the trigger-action message is sent to all cores.

Specifically, Trigger id is set to 0xffffffff, namely, all core groups.

S524. Each core receives the trigger-action message, in which Trigger id is 0xffffffff, and the successful matching of each core by default can be understood, and each core directly executes an action action, that is, directly executes Action:"add group group-2 2,3...13".

In this embodiment, Core2,3...13 add core group 2 into their respective trigger id tables.

S525. Core2,3...13 each return trigger id:group-1, action: "coreid add group-2 ok" to the main control core, and here coreids are Core2, core3..., core 13.

S526. After receiving feedbacks from all cores in the core group, the main control core sends an RSP packet for indicating successfully creating core group 2 to the HDB.

S527. The HDB shows the message for indicating successfully creating core group 2 to the user.

S531. The user sends a command for creating core group 3.

S532. After receiving the command for creating core group 3, the debugger HDB sends, to a main control core, an RSP packet for indicating creation of core group 3; and in this embodiment, the main control core is core0.

S533. After receiving the RSP packet for indicating creation of core group 3, the main control core sends a trigger-action message on the inter-processor interconnect bus, in which the trigger-action message contains: Trigger id: all, Action:"add group group-3 2,3,4", and Trigger id is all, representing that the trigger-action message is sent to all cores.

Specifically, Trigger id is set to 0xffffffff, namely, all core groups.

S534. Each core receives the trigger-action message, in which Trigger id is 0xffffffff, and the successful matching of each core can be understood, and each core directly executes an action action, namely, directly executes Action:"add group group-3 2,3,4".

In this embodiment, Core2,3,4 add core group 3 into their respective trigger id tables.

S535. Core2,3,4 each return trigger id:group-1, action: "coreid add group-3 ok" to the main control core, and here coreids include Core2, core3, and core4.

S536. After receiving feedbacks from all cores in the core group, the main control core sends an RSP packet for indicating successfully creating core group 3 to the HDB.

S537. The HDB shows the message for indicating successfully creating core group 3 to the user.

S541. The user sends a command for creating core group 4.

S542. After receiving the command for creating core group 4, the debugger HDB sends, to a main control core, an RSP packet for indicating creation of core group 4; and in this embodiment, the main control core is core0.

S543. After receiving the RSP packet for indicating creation of core group 4, the main control core sends a trigger-action message on the inter-processor interconnect bus, in which the trigger-action message contains: Trigger id: all, Action:"add group group-4 5,6,7", and Trigger id is all, representing that the trigger-action message is sent to all cores.

Specifically, Trigger id is set to 0xffffffff, namely, all core groups.

S544. Each core (represented by coreX in this embodiment) receives the trigger-action message, in which Trigger id is 0xffffffff, and the successful matching of each core by default can be understood, and each core directly executes an action action, that is, directly executes Action:"add group group-4 5,6,7".

In this embodiment, Core5,6,7 add core group 4 into their respective trigger id tables.

S545. Core5,6,7 each return trigger id:group-1, action: "coreid add group-4 ok" to the main control core, and here coreids include Core5, core6, and core7.

S546. After receiving the responses of all cores in the core group, the main control core sends an RSP packet for indicating successfully creating core group 4 to the HDB.

S547. The HDB shows the message for indicating successfully creating core group 4 to the user.

S551. The user sends a command for creating core group 5.

S552. After receiving the command for creating core group 5, the debugger HDB sends, to a main control core, an RSP packet for indicating creation of core group 5; and in this embodiment, the main control core is core0.

S553. After receiving the RSP packet to a main control core core group 5, the main control core sends a trigger-action message on the inter-processor interconnect bus, in which the trigger-action message contains: Trigger id: all, Action:"add group group-5 8,9,10", and Trigger id is all, representing that the trigger-action message is sent to all cores.

Specifically, Trigger id is set to 0xffffffff, namely, all core groups.

S554. Each core (represented by coreX in this embodiment) receives the trigger-action message, in which Trigger id is 0xffffffff, and the successful matching of each core by default can be understood, and each core directly executes an action action, that is, directly executes Action:"add group group-5 8,9,10".

In this embodiment, Core8,9,10 add core group 5 into their respective trigger id tables.

S555. Core8,9,10 each return trigger id:group-1, action: "coreid add group-5 ok" to the main control core, and here coreids include Core8, core9, and core10.

S556. After receiving feedbacks from all cores in the core group, the main control core sends an RSP packet for indicating successfully creating core group 5 to the HDB.

S557. The HDB shows the message for indicating successfully creating core group 5 to the user.

S561. The user sends a command for creating core group 6.

S562. After receive the command for creating core group 6, the debugger HDB sends, to a main control core, an RSP packet for indicating creation of core group 6; and in this embodiment, the main control core is core0.

S563. After receiving the RSP packet for indicating creation of core group 6, the main control core sends a trigger-action message on an inter-processor interconnect bus, in which the trigger-action message contains: Trigger id: all, Action:"add group group-6 11,12,13", and Trigger id is all, representing that the trigger-action message is sent to all cores.

Specifically, Trigger id is set to 0xffffffff, namely, all core groups.

S564. Each core (represented by coreX in this embodiment) receives the trigger-action message, in which Trigger id is 0xffffffff, and the successful matching of each core by default can be understood, and each core directly executes an action action, that is, directly executes Action:"add group group-6 11,12,13".

In this embodiment, Core11,12,13 add core group 6 into their respective trigger id tables.

S565. Core11,12,13 each return trigger id:group-1, action: "coreid add group-6 ok" to the main control core, and here coreids include Core11, core12, and core13.

S566. After receiving feedbacks from all cores in the core group, the main control core sends an RSP packet for indicating successfully creating core group 6 to the HDB.

S567. The HDB shows the message for indicating successfully creating core group 6 to the user.

S571. The user sends a command for creating core group 7.

S572. After receiving the command for creating core group 7, the debugger HDB sends, to a main control core, an RSP packet for indicating creation of core group 7; and in this embodiment, the main control core is core0.

S573. After receiving the RSP packet for indicating creation of core group 7, the main control core sends a trigger-action message on an inter-processor interconnect bus, in which the trigger-action message contains: Trigger id: all, Action:"add group group-7 2,5,8,11", and Trigger id is all, representing that the trigger-action message is sent to all cores.

Specifically, Trigger id is set to 0xffffffff, namely, all core groups.

S574. Each core (represented by coreX in this embodiment) receives the trigger-action message, in which Trigger id is 0xffffffff, and the successful matching of each core by default can be understood, and each core directly executes an action action, that is, directly executes Action:"add group group-7 2,5,8,11".

In this embodiment, Core2,5,8,11 add core group 7 into their respective trigger id tables.

S575. Core2,5,8,11 each return trigger id:group-1, action: "coreid add group-7 ok" to the main control core, and here coreids include Core2, core5, core8, and core11.

S576. After receiving feedbacks from all cores in the core group, the main control core sends an RSP packet for indicating successfully creating core group 7 to the HDB.

S577. The HDB shows the message for indicating successfully creating core group 7 to the user.

S581. The user sends a command for creating core group 8.

S582. After receiving the command for creating core group 8, the debugger HDB sends, to a main control core, an RSP packet for indicating creation of core group 8; and in this embodiment, the main control core is core0.

S583. After receiving the RSP packet for indicating creation of core group 8, the main control core sends a trigger-action message on an inter-processor interconnect bus, in which the trigger-action message contains: Trigger id: all, Action:"add group group-8 1,3,4", and Trigger id is all, representing that the trigger-action message is sent to all cores.

Specifically, Trigger id is set to 0xffffffff, that is, all core groups.

S584. Each core (represented by coreX in this embodiment) receives the trigger-action message, in which Trigger id is 0xffffffff, and the successful matching of each core by default can be understood, and each core directly executes an action action, that is, directly executes Action:"add group group-8 1,3,4".

In this embodiment, Core1,3,4 add core group 8 into their respective trigger id tables.

S585. Core1,3,4 each return trigger id:group-1, action: "coreid add group-8 ok" to the main control core, and here coreids include Core1, core3, and core4.

S586. After receiving feedbacks from all cores in the core group, the main control core sends an RSP packet for indicating successfully creating core group 8 to the HDB.

S587. The HDB shows the message for indicating successfully creating core group 8 to the user.

Through the foregoing interaction process, each core is stored with a corresponding trigger id table, and the trigger id table is used for storing a group to which the core belongs. In an implementation manner, each core has two tables, that is, a hardware group table (Hardware Group Table) and a software group table (Software Group Table), in which the hardware group table is stored in a hardware register of the current processor core, while the software group table is stored in the memory of the current processor core, and core group information is preferentially stored in the hardware group table. The storage amount of the hardware group table is limited, and generally information of four core groups can be stored. When the hardware group table is full, the information is then stored in the software group table, thereby implementing the storage of core group information. As shown in FIG. 5c, FIG. 5c is a schematic diagram of a hardware group table and a software group table after core groups are created in a core group scenario in FIG. 5b. It should be noted that for ease of representation, here the types of 14 cores are not distinguished.

2) Delete a core group

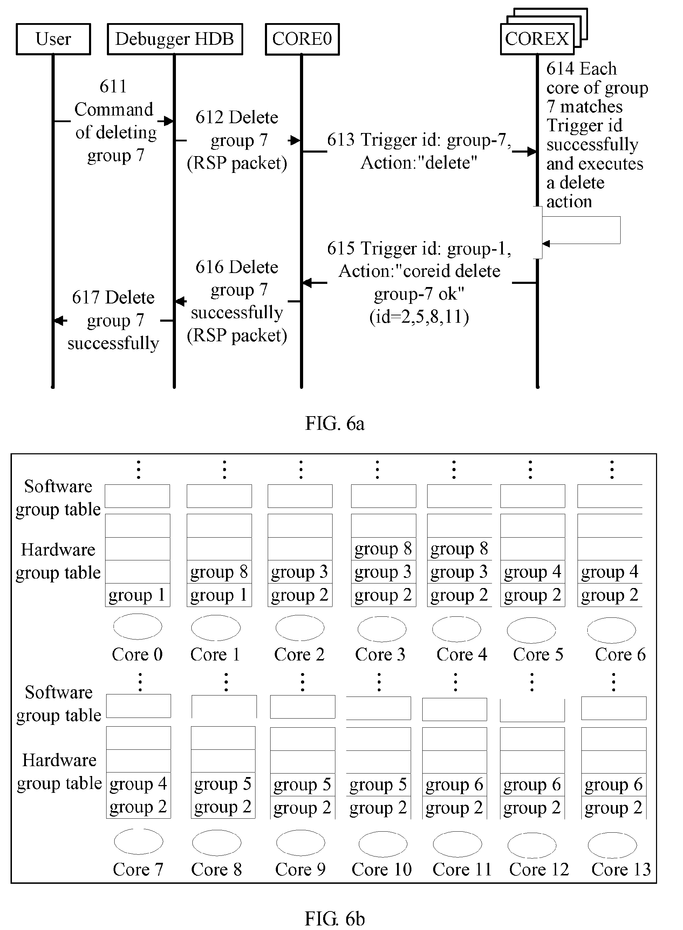

Referring to FIG. 6a, FIG. 6a is a schematic diagram of the interaction of a multi-core group debugging method according to an embodiment of the present invention. This embodiment mainly introduces: during running, the core group Group7 formed by cores 2, 5, 8, 11 is dynamically deleted. The method is applied to the debugging system environment shown in FIG. 3a, and may specifically include the following steps:

S611. A user sends a command for deleting core group 7.

S612. After receiving the command for deleting core group 7, a debugger HDB sends an RSP (RSP, remote serial protocol, the protocol used in HDB remote debugging) packet of deleting core group 7 to a main control core. In this embodiment, the main control core is core0.

S613. After receiving the RSP packet of deleting core group 7, the main control core sends a corresponding trigger-action message on an inter-processor interconnect bus, in which the trigger-action message contains: Trigger id:group-7, Action:"delete".

It should be noted that, Trigger id is group-7, representing that the trigger-action message is sent to core group 7.

It should be noted that the content of the Action action can be contained in the trigger-action message for transfer on the inter-processor interconnect bus; or only a trigger-action message containing address information that points to an action action may be transferred. For the latter implementation, the core that receives the trigger-action message obtains the content of the Action action through the address information. In this embodiment, the former implementation is employed, that is, the content of the Action action is directly contained in the trigger-action message for transfer.

S614. Each core (represented by coreX in this embodiment) in the multi-core processor system receives the trigger-action message, matches a Trigger id in the trigger-action message and one or more Trigger ids in a trigger id table stored in the core, if the Trigger id in the message is matched with one Trigger id in the trigger id table successfully, executes an action action represented by an Action field in the trigger-action message; and otherwise, executes no action.

In this embodiment, each core (core 2, 5, 8 or 11) of core group 7 matches Trigger id:group-7 in the received trigger-action message and any trigger id in the trigger id table stored in the core, and if Trigger id:group-7 is matched with "group 7" in the trigger id table successfully, executes a delete action represented by an Action field in the trigger-action message.

In an implementation manner, each core is stored with a corresponding trigger id table, and the trigger id table is used for storing a group to which the core belongs. In an implementation manner, each core has two tables, that is, a hardware group table (Hardware Group Table) and a software group table (Software Group Table). Referring to FIG. 5c, in which hardware group tables and software group tables of cores 2, 5, 8, 11 in core group Group7 are exhibited.

S615. Cores 2, 5, 8, 11 each return trigger id:group-1, action: "coreid delete group-7 ok" to the main control core, and here coreids include Core2, core5, core8, and core11.

Generally, to only return to the main control core Core0, in this embodiment of the present invention, group-1 should include Core0 only.

Exemplarily, in this embodiment of the present invention, group-1 includes Core0 and Core1, and a core group may be used to serve as a main control core. In multiple core systems, a group core serves as a main control core to balance the communication traffic of the main control core. In addition, the effect of mutual backup can be achieved.

S616. After receiving feedbacks from all cores in the core group, the main control core sends an RSP packet of successfully deleting core group 7 to the HDB.

S617. The HDB shows the message of successfully deleting core group 7 to the user.

As shown in FIG. 6b, FIG. 6b shows a latest core-group condition of a multi-core processor system having 14 cores (include 2 CPUs and 12 DSPs) after core group 7 is deleted, and specifically shows the latest hardware group table and software group table of each of the 14 cores after core group 7 is deleted.

3) Dynamically modify each member core in a group.

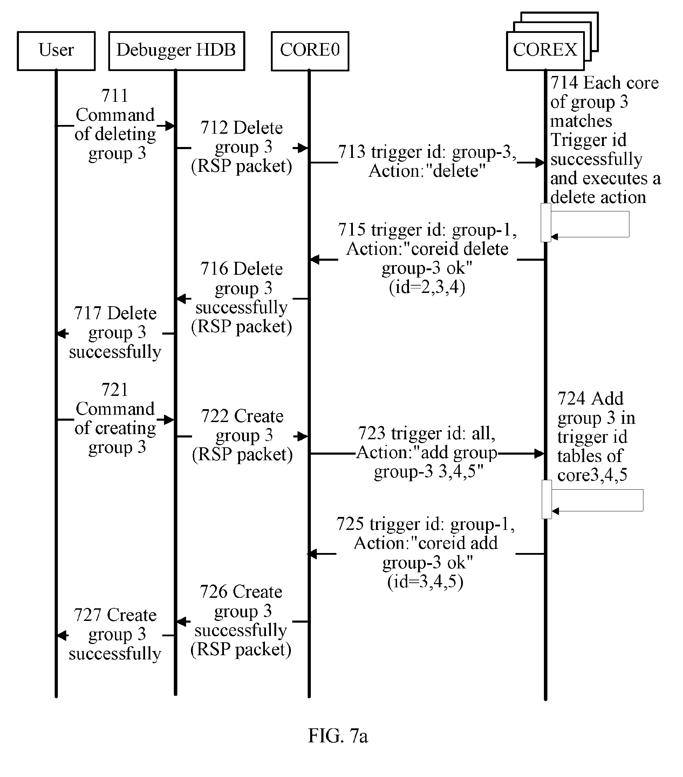

Referring to FIG. 7a, FIG. 7a is a schematic diagram of the interaction of a multi-core group debugging method according to an embodiment of the present invention. This embodiment mainly introduces: during running, a member core in the core group Group3 is dynamically modified. Specifically, the example of modifying core 2 in the core group Group3 to core 5 is taken for illustration. The method is applied to the debugging system environment shown in FIG. 3a, and may specifically include the following steps:

S711. A user sends a command for deleting core group 3.

S712. After receiving the command for deleting core group 3, a debugger HDB sends an RSP (RSP, remote serial protocol, the protocol used in HDB remote debugging) packet of deleting core group 3 to the main control core. In this embodiment, the main control core is core0.

S713. After receiving the RSP packet of deleting core group 3, the main control core sends a corresponding trigger-action message on an inter-processor interconnect bus, and the trigger-action message contains: Trigger id:group-3, Action:"delete".

It should be noted that, Trigger id is group-3, representing that the trigger-action message is sent to core group 3.

It should be noted that, the content of Action action can be contained in a trigger-action message for transfer on an inter-processor interconnect bus; or only a trigger-action message containing address information that points to an action action can be transferred. For the latter implementation, the core that receives the trigger-action message obtains the content of the Action action through the address information. In this embodiment, the former implementation is employed, that is, the content of the Action action is directly contained in the trigger-action message for transfer.

S714. Each core (represented by coreX in this embodiment) in the multi-core processor system receives the trigger-action message, matches a Trigger id in the trigger-action message and any trigger id in a trigger id table stored in the core, if the Trigger id is matched with one Trigger id in the trigger id table successfully, executes an action action represented by an Action field in the trigger-action message; and otherwise, executes no action.

In this embodiment, each core (core 2, 3 or 4) in core group 3 matches Trigger id:group-3 in the received trigger-action message and any trigger id in a trigger id table stored in the each core, and if Trigger id:group-3 is matched with group 3 in the trigger id table successfully, executes a delete action represented by an Action field in the trigger-action message.

In an implementation manner, each core is stored with a corresponding trigger id table, and the trigger id table is used for storing a group to which the core belongs. In an implementation manner, each core has two tables, that is, a hardware group table (Hardware Group Table) and a software group table (Software Group Table). Referring to FIG. 6b, hardware group tables and software group tables of cores 2, 3, and 4 in the core group Group3 are shown.

S715. Cores 2, 3, 4 each return trigger id:group-1, action: "coreid delete group-3 ok" to the main control core, and here coreids include Core2, core3, and core4.

Generally, to respond to the main control core Core0 only, in this embodiment of the present invention, group-1 should include Core0 only.

Exemplarily, in this embodiment of the present invention, group-1 includes Core0 and Core1, and a core group may also be used to work as a main control core. In multiple core systems, a group core serves as a main control core to balance the communication traffic of the main control core. In addition, the effect of mutual backup can be achieved.

S716. After receiving feedbacks from all cores in the core group, the main control core sends an RSP packet of successfully deleting core group 3 to the HDB.

S717. The HDB shows the message of successfully deleting core group 3 to the user.

S721. The user sends a command for creating core group 3.

S722. After receiving the command for creating core group 3, the debugger HDB sends, to a main control core, an RSP (RSP, remote serial protocol, the protocol used in HDB remote debugging) packet for indicating creation of core group 3; and in this embodiment, the main control core is core0.

S723. After receiving the RSP packet for indicating creation of core group 3, the main control core sends a trigger-action message on the inter-processor interconnect bus, in which the trigger-action message contains: Trigger id: all, Action:"add group group-3 3,4,5", and Trigger id is all, representing that the trigger-action message is sent to all cores.

Specifically, Trigger id is set to 0xffffffff, namely, all core groups.

S724. Each core (represented by coreX in this embodiment) receives the trigger-action message, in which Trigger id is 0xffffffff, each core directly executes an action action, that is, directly executes Action:"add group group-3 3,4,5".

In this embodiment, Core3,4,5 add core group 3 into their respective trigger id tables.

S725. Core3,4,5 each return trigger id:group-1, action: "coreid add group-3 ok" to the main control core, and here coreids include core3, core4, and Core5.

S726. After receiving feedbacks from all cores in the core group, the main control core sends an RSP packet for indicating successfully creating core group 3 to the HDB.

S727. The HDB shows the message for indicating successfully creating core group 3 to the user.

As shown in FIG. 7b, FIG. 7b shows the latest core-group condition of a multi-core processor system having 14 cores (including 2 CPUs and 12 DSPs) after core group 3 is modified, and specifically shows the latest hardware group table and software group table of each of the 14 cores after core group 3 is modified.

The scenario that a user stops a core group: The user sends a command for stopping core group 1 to an HDB, the HDB sends an RSP packet for stopping core group 1 to a main control core. After receiving the RSP for stopping core group 1, the main control core sends Trigger:group-1, action:"stop" on an inter-processor interconnect bus. Each core in Group-1 receives the trigger-action message, the comparison or matching of a trigger id is performed successfully, and a stop action is then executed. Core2, 3, 4 modify core statuses to stop, and return stop addresses to the main control core, and after receiving feedbacks from all cores in the core group, the main control core confirms that core group 1 is successfully stopped. The RSP packet for indicating that each core in the core group stops PC and that the core group is successfully stopped is sent to the HDB, and the HDB shows information, such as a stop address and a line number of each core, to the user.

The scenario that a user runs a core group: The user sends a command for running core group 1 to an HDB, and the HDB sends an RSP packet for running core group 1 to the main control core. After receiving the RSP packet for running core group 1, the main control core sends Trigger:group-1, action:"continue" on an inter-processor interconnect bus. Each core in Group-1 receives the trigger-action message, the comparison or matching of an trigger id is performed successfully, and then a continue action is executed. Core2, 3, 4 modify core statuses to running.

In the above examples, the foregoing debugging command can be executed on a single core as long as core group 1 is modified into a core group number corresponding to a single core.

In conclusion, in the embodiments of the present invention, a trigger id in an obtained trigger-action message and a trigger id stored in a current processor core are matched, if the matching succeeds, an action action indicated by action field information in the trigger-action message is executed, so as to synchronously trigger one or more processor cores that belong to one status or one attribute, where the one or more processor cores that belong to the same status or attribute are identified by the same trigger id, thereby enhancing the flexibility and efficiency of multi-core trigger, and particularly enhancing the flexibility and efficiency of synchronous multi-core trigger.

Furthermore, during the application to a debugging scenario, in this embodiment of the present invention, based on the flexible grouping of processor cores, a group identity group id in an obtained second debugging message and a group identity stored in a current processor core (the group identity group id is used for representing a core group to which the current processor core belongs) are matched, and if the group identity group id in the second debugging message is matched with the group identity group id stored in the current processor core successfully, an action action indicated by action field information in the second debugging message is executed, so as to synchronously debug one or more processor cores contained in the same core group, thereby enhancing the flexibility and efficiency of multi-core debugging, and particularly enhancing the flexibility and efficiency of multi-core group debugging.

Furthermore, in the embodiments of the present invention, multi-core debugging across multiple types of cores having different architecture is implemented, and this embodiment of the present invention is not limited to a homogeneous and heterogeneous core, thereby implementing the cooperative debugging of an entire system.

The embodiments of the present invention have the capability of implementing a highly effective debugging function. With the support of hardware, the break action of a group core can be accomplished within several cycles or even tens of cycles. When an inter-processor interrupt method is employed, a main control core needs to communicate with a debugging core for several times, for at least over hundreds of cycles, because after being interrupted, each core needs to query, from the main control core, what action to execute.

With the embodiments of the present invention, flexible group implementation is supported. Theoretically, any quantity of logical groups can be supported. A user can decide needed logical groups according to the attributes of the program being debugged. When a hardware table is full, a software table can be used as extension.

The embodiments of the present invention have high expandability, characterized in that: a hardware group table and relevant components occupy a very small quantity of resources and can be easily implemented in multiple core systems. When the number of core groups that a processor core needs to define exceeds the maximum number of hardware registers, extension can be implemented by software.

It should be noted that, in the embodiments of the present invention, a core group identity group ID can be managed in a manner similar to IP address allocation, a matching unit can support comparison or matching in a subnet mask manner, and in a scale of multiples cores (exceeding 1000 cores), and the multiple cores can be managed by using a method similar to that of dividing subnets.

Persons of ordinary skill in the art should understand that all or a part of the steps of the method according to the embodiments may be implemented by a computer program instructing relevant hardware. The program may be stored in a computer readable storage medium. When the program runs, the steps of the method according to the embodiments are performed. The storage medium may be a magnetic disk, an optical disk, a read-only memory (Read-Only Memory, ROM), or a random access memory (Random Access Memory, RAM).

The objectives, technical solutions and advantages of the present invention are described in detail with reference to several exemplary embodiments. It should be understood that the forgoing description is merely about the exemplary embodiments of the present invention, the present invention is not limited to such embodiments. Any modification, equivalent replacement, or improvement made without departing from the idea and principle of the present invention should fall within the protection scope of the present invention.

## Claims

1. A method for triggering an action, applied in a multi-core processor system comprising at least two processor cores, and the method comprising:
obtaining a trigger-action message, wherein the trigger-action message comprises a trigger identity trigger id and action field information; and
matching the trigger identity trigger id in the trigger-action message and a trigger identity trigger id stored in a current processor core, and if the matching succeeds, executing an action action indicated by the action field information in the trigger-action message.

2. The method according to claim 1, wherein, the matching the trigger identity trigger id in the trigger-action message and the trigger identity trigger id stored in the current processor core, and if the matching succeeds, executing the action action indicated by the action field information in the trigger-action message, comprises:
matching the trigger identity trigger id in the trigger-action message and one or more trigger identities trigger ids stored in a hardware register of the current processor core, and if the trigger identity trigger id in the trigger-action message is matched with one trigger identity trigger id stored in the hardware register successfully, executing the action action indicated by the action field information in the trigger-action message.

3. The method according to claim 2, wherein if the matching fails, the method further comprises:
matching the trigger identity trigger id in the trigger-action message and one or more trigger identities trigger ids stored in a memory of the current processor core, if the trigger identity trigger id in the trigger-action message is matched with one trigger identity trigger id stored in the memory successfully, executing the action action indicated by the action field information in the trigger-action message.

4. The method according to claim 3, before the step of matching the trigger identity trigger id in the trigger-action message and the one or more trigger identities trigger ids stored in the memory of the current processor core, further comprising:
determining whether the number of core groups to which the current processor core belongs is greater than a first threshold value, if the number of core groups to which the current processor core belongs is greater than the first threshold value, executing the step of matching the trigger identity trigger id in the trigger-action message and the one or more trigger identities trigger ids stored in the memory of the current processor core.

5. The method according to any one of claims 1 to 4, wherein the obtaining the trigger-action message comprises:
receiving, through an inter-processor interconnect bus, the trigger-action message sent by a main control processor core; or,
according to an inter-processor communication interrupt received through an inter-processor interconnect bus, obtaining the trigger-action message sent by a main control processor core.

6. The method according to any one of claims 1 to 4, wherein the trigger identity trigger id in the trigger-action message is a group identity group id, or a core identity core id; the group identity group id is used for representing a core group which needs to execute the action action indicated by the action field information in the trigger-action message; the core identity core id is used for representing a processor core which needs to execute the action action indicated by the action field information; the action field information in the trigger-action message is an action action command, or address information that points to an action action command, the action action command comprises one or more of a create group command, a delete group command, a stop group command, a run group command, a set break command (break), a resume command (resume), and an execute one step command (step).

7. The method according to any one of claims 1 to 4, wherein the trigger identity trigger id in the trigger-action message is a global core group identity, the action field information is a create group command, or address information that points to a create group command, the create group command contains a group identity of a core group to be created and a core identity of a member core that joins the core group to be created;
if the action field information is the create group command, the step of executing the action action indicated by the action field information in the trigger-action message comprises:
when the core identity of the member core that joins the core group to be created and a core identity of the current processor core are the same, where the core identity of the member core is contained in the create group command, storing the group identity of the core group to be created according to the create group command, where the group identity of the core group to be created is contained in the create group command; and
if the action field information is the address information that points to the create group command, the step of executing the action action indicated by the action field information in the trigger-action message comprises:
obtaining the create group command according to the address information; and
when the core identity of the member core that joins the core group to be created and a core identity of the current processor core are the same, where the core identity of the member core is contained in the create group command, storing the group identity of the core group to be created according to the create group command, where the group identity of the core group to be created is contained in the create group command.

8. The method according to any one of claims 1 to 4, wherein the trigger identity trigger id in the trigger-action message is a group identity group id, the trigger identity stored in the current processor core is a group identity group id, and the group identity group id is used for representing a core group to which the current processor core belongs;
if the action field information is a delete group command, the step of executing the action action indicated by the action field information in the trigger-action message comprises:
according to the delete group command, deleting the group identity group id in the trigger-action message from one or more one group identities group ids stored in the current processor core;
if the action field information is address information that points to a delete group command, the step of executing the action action indicated by the action field information in the trigger-action message comprises:
obtaining the delete group command according to the address information; and
according to the delete group command, deleting the group identity group id in the trigger-action message from the one or more one group identities group ids stored in the current processor core.

9. A multi-core processor system, wherein the multi-core processor system comprises a main control core and multiple action cores, the main control core communicates with the multiple action cores through an inter-processor interconnect bus,
the main control core is configured to transmit, through the inter-processor interconnect bus, a trigger-action message or an inter-processor communication interrupt that points to a trigger-action message, wherein the trigger-action message comprises a trigger identity trigger id and action field information; and
each of the multiple action cores is configured to receive the trigger-action message, or obtain the trigger-action message according to the received inter-processor communication interrupt, match the trigger identity trigger id in the trigger-action message and a trigger identity trigger id stored in the current action core, and if the matching succeeds, execute an action action indicated by the action field information in the trigger-action message.

10. The system according to claim 9, wherein the trigger identity trigger id in the trigger-action message is a group identity group id, the group identity group id is used for representing a core group which needs to execute the action action indicated by the action field information in the trigger-action message;
each of the multiple action cores is further configured to store a group identity of a core group to be monitored and a group identity of a core group to which the main control core belongs, and is configured to monitor trigger-action message interaction between the main control core and the core group to be monitored, according to the group identity of the core group to be monitored and the group identity of the core group to which the main control core belongs, wherein the group identity stored in the current action core is used for representing a core group to which the current action core belongs.

11. A processor core, wherein the processor core comprises:
a storage unit, configured to store one or more trigger identities trigger ids, wherein the one or more trigger identities trigger ids are used for representting one or more core groups to which the processor core belongs, or the processor core;
an obtaining unit, configured to obtain a trigger-action message, wherein the trigger-action message comprises a trigger identity trigger id and action field information;
a matching unit, configured to match the trigger identity trigger id in the trigger-action message and the one or more trigger identities trigger ids stored in the storage unit;
a processing unit, configured to, if it is obtained by the matching unit that the trigger identity trigger id in the trigger-action message is matched with one trigger identity trigger id stored in the storage unit successfully, execute an action action indicated by the action field information in the trigger-action message.

12. The processor core according to claim 11, wherein the obtaining unit is specifically configured to receive the trigger-action message through an inter-processor interconnect bus; or, is specifically configured to receive, through an inter-processor interconnect bus, an inter-processor communication interrupt that points to the trigger-action message, and according to the inter-processor communication interrupt, obtain the trigger-action message sent by a main control processor core.

13. The processor core according to claim 11 or 12, wherein the storage unit comprises a register and/or memory,
the comparison unit comprises:
a hardware comparison unit, configured to match/compare the trigger identity trigger id in the trigger-action message and one or more trigger identities trigger ids stored in the register, and if the trigger identity trigger id in the trigger-action message is matched with one trigger identity trigger id stored in the register successfully, trigger the processing unit to execute the action action indicated by the action field information in the trigger-action message;
a software comparison unit, configured to, if the matching performed by the hardware comparison unit fails, match the trigger identity trigger id in the trigger-action message and one or more trigger identities trigger ids stored in the memory, if the trigger identity trigger id in the trigger-action message is matched with one trigger identity trigger id stored in the memory successfully, trigger the processing unit to execute the action action indicated by the action field information in the trigger-action message.

14. The processor core according to claim 13, wherein, the processor core further comprises:
a calculation determiner, configured to determine whether the number of core groups to which the processor core belongs is greater than a first threshold value;
a software comparison unit, specifically configured to, if the matching performed by the hardware comparison unit fails and the number of core groups to which the current processor core belongs is greater than the first threshold value, match the trigger identity trigger id in the trigger-action message and the one or more trigger identities trigger ids stored in the memory, and if the trigger identity trigger id in the trigger-action message is matched with one trigger identity trigger id stored in the memory successfully, trigger the processing unit to execute the action action indicated by the action field information in the trigger-action message.

15. A multi-core group debugging method, applied in a multi-core processor system comprising at least two processor cores, and the method comprising:
obtaining a second debugging message, wherein the second debugging message comprises a group identity group id and action field information;
matching the group identity group id in the second debugging message and one or more group identities in a group table stored in a current processor core, and if the group identity group id in the second debugging message is matched with one group identity group id in the group table successfully, executing an action action indicated by the action field information in the second debugging message, wherein the group table stored in the current processor core comprises the one or more group identities group ids, the one or more group identities group ids are used for representing one or more core groups to which the current processor core belongs.

16. The method according to claim 15, wherein the group table comprises a hardware group table and a software group table, the hardware group table is stored in a hardware register of the current processor core, the software group table is stored in memory of the current processor core;
the matching the group identity group id in the second debugging message and one or more group identities in a group table stored in a current processor core, and if the group identity group id in the second debugging message is matched with one group identity group id in the group table successfully, executing an action action indicated by the action field information in the second debugging message, comprises:
matching the group identity group id in the second debugging message and a group identity in the hardware group table, and if the group identity group id in the second debugging message is matched with the group identity group id in the hardware group table successfully, executing the action action indicated by the action field information in the second debugging message;
if the matching fails, matching the group identity group id in the second debugging message and a group identity in the software group table, and if the matching succeeds, executing the action action indicated by the action field information in the second debugging message.

17. The method according to claim 15 or 16, wherein the obtaining the second debugging message comprises:
receiving, through an inter-processor interconnect bus, the second debugging message sent by a main control processor core; or,
obtaining the second debugging message sent by a main control processor core, according to an inter-processor communication interrupt received through an inter-processor interconnect bus;
wherein the main control processor core sends the second debugging message obtained after conversion on the inter-processor interconnect bus in response to a first debugging message delivered by a user.

18. The method according to claim 15 or 16, wherein the action field information in the second debugging message is an action action command, or address information that points to an action action command, the action command is selected from a group consisting of a create group command, a stop group command, a run group command, a set break command (break), a resume command (resume), and an execute one step command (step).

19. The method according to claim 15 or 16, wherein,
the group identity group id in the second debugging message is a global core group identity, the action field information is a create group command, or address information that points to a create group command, the create group command contains a group identity of a core group to be created and a core identity of a member core that joins the core group to be created;
if the action field information is the create group command, the step of executing the action action indicated by the action field information in the second debugging message comprises:
when the core identity of the member core that joins the core group to be created and a core identity of the current processor core are the same, where the core identity of the member core is contained in the create group command, storing, according to the create group command, the group identity of the core group to be created, where the group identity of the core group to be created is contained in the create group command;
if the action field information is the address information that points to the create group command, the step of executing the action action indicated by the action field information in the second debugging message, comprises:
obtaining the create group command according to the address information; and
when the core identity of the member core that joins the core group to be created and a core identity of the current processor core are the same, where the core identity of the member core is contained in the create group command, storing, according to the create group command, the group identity of the core group to be created, where the group identity of the core group to be created is contained in the create group command.

20. The method according to claim 15 or 16, wherein,
if the action field information is a delete group command, the step of executing the action action indicated by the action field information in the second debugging message, comprises:
according to the delete group command, deleting the group identity group id in the trigger-action message from the one or more group identities group ids stored in the current processor core;
if the action field information is address information that points to the delete group command, the step of executing the action action indicated by the action field information in the second debugging message comprises:
obtaining the delete group command according to the address information; and
according to the delete group command, deleting the group identity group id in the trigger-action message from the one or more group identities group ids stored in the current processor core.

21. A debugging system, wherein the debugging system comprises a front-end debugger and a back-end debugging platform, a multi-core processor system is deployed in the back-end debugging platform, the multi-core processor system comprises a main control core and multiple action cores, the main control core communicates with the multiple action cores through an inter-processor interconnect bus,
the front-end debugger is configured to receive a debugging command delivered by a user, convert the debugging command into a corresponding first debugging message and send the first debugging message to the main control core, wherein the first debugging message comprises a group identity group id and action field information;
the main control core is configured to convert the first debugging message into a second debugging message recognizable in inter-processor communication after receiving the first debugging message, send, through the inter-processor interconnect bus, the second debugging message or an inter-processor communication interrupt that points to the second debugging message; and
each of the multiple action cores is configured to receive the second debugging message or obtain the second debugging message according to the received inter-processor communication interrupt, match a group identity group id in the second debugging message and a group identity group id stored in the current action core, and if the matching succeeds, execute an action action indicated by action field information in the second debugging message, wherein the group identity group id stored in the current action core is used for representing a core group to which the current action core belongs.

22. The system according to claim 21, wherein the main control core is further configured to match the group identity group id in the second debugging message and a group identity group id stored in the current main control core, and if the matching succeeds, execute the action action indicated by the action field information in the second debugging message, wherein the group identity group id stored in the current main control core is used for representing a core group to which the current main control core belongs.
